# EUROPEAN PATENT APPLICATION

(11) **EP 4 366 239 A1**
(43) Date of publication of application: **08.05.2024**
(21) Application number: 23207367.6
(22) Date of filing: 02.11.2023
(51) Int. Cl.: H04L 9/40, H04W 12/02, H04W 12/041

(54) **ANONYMOUS REGISTRATION WITH A COMMUNICATION NETWORK**

(30) Priority: 04.11.2022 IN 202241063102
(71) Applicant: Nokia Technologies Oy, 02610 Espoo (FI)
(72) Inventor: BJERRUM, Bo Holm, 9240 Nibe (DK); MAVUREDDI DHANASEKARAN, Ranganathan, 81737 Munich (DE); KHARE, Saurabh, 560043 Bangalore (IN)
(74) Representative: Nokia EPO representatives

(57) **Abstract**

An apparatus for a network node acting as a gateway entity of a second communication network providing access to a first communication network being different to the second communication network, the apparatus comprising at least one processor, and at least one memory storing instructions that, when executed by the at least one processor, cause the apparatus at least to receive a registration request of a user equipment for a registration to the first communication network via the second communication network, wherein the registration request comprises an anonymized subscriber identification element, to obtain a temporary identification for the user equipment, and to forward the temporary identification for the user equipment to the user equipment.

## Description

### BACKGROUND

### Field

Examples of embodiments described herein relate to apparatuses, methods, systems, computer programs, computer program products and (non-transitory) computer-readable media usable for controlling a registration of a user equipment having an anonymized subscriber information to a first communication network via a second communication network being different to the first communication network. For instance, some examples of embodiments relate to apparatuses, methods, systems, computer programs, computer program products and (non-transitory) computer-readable media usable for conducting a registration procedure of a user equipment to a first communication network, such as a 3GPP based network, via a second communication network, such as a trusted non-3GPP network wherein the user equipment uses an anonymized subscriber information, such as an anonymous subscription concealed identifier (SUCI), in the initial registration.

### Background

The following description of background may include insights, discoveries, understandings or disclosures, or associations, together with disclosures that are not already known, but rather provided herein by the disclosure as one or more examples of embodiments. Some of examples of embodiments may be specifically pointed out below, whereas other of such contributions will be apparent from the related context.

The following meanings for the abbreviations used herein apply:
- 3GPP: 3^{rd} Generation Partnership Project
- 4G: fourth generation
- 5G: fifth generation
- 5GC: 5G core
- 5GS: 5G system
- AAA: authentication, authorization and accounting
- AKA: authentication and key agreement
- AMF: access and mobility management function
- AUSF: authentication server function
- CPU: central processing unit
- EAP: extensible authentication protocol
- eNB: E-UTRAN Node B
- gNB: next generation node B
- GUTI: global unique temporary identifier
- ID: identification, identifier
- IMSI: international mobile subscriber identity
- L2: level 2
- LTE: Long Term Evolution
- LTE-A: LTE Advanced
- N3IWF: non-3GPP interworking function
- NAI: network access identifier
- NAS: non-access stratum
- NPN: non-public network
- NW: network, network side
- PLMN: public land mobile network
- PDU: packet data unit
- PPP: point-to-point protocol
- RAN: radio access network
- SMC: security mode command
- SNPN: standalone non-public network
- SSID: service set ID
- SUCI: subscription concealed identifier
- SUPI: subscription permanent identifier
- TA: tracking area
- TMSI: temporary mobile subscriber identity
- TNAN: trusted non-3GPP access network
- TNAP: trusted non-3GPP access point
- TNGF: trusted non-3GPP gateway function
- TWIF: trusted WLAN interworking function
- UE: user equipment
- WLAN: wireless local area network

### SUMMARY

According to an example of an embodiment, there is provided, for example, an apparatus for a network node acting as a gateway entity of a second communication network providing access to a first communication network being different to the second communication network, the apparatus comprising at least one processor, and at least one memory storing instructions that, when executed by the at least one processor, cause the apparatus at least to receive a registration request of a user equipment for a registration to the first communication network via the second communication network, wherein the registration request comprises an anonymized subscriber identification element, to obtain a temporary identification for the user equipment, and to forward the temporary identification for the user equipment to the user equipment.

Furthermore, according to an example of an embodiment, there is provided, for example, a method for a network node acting as a gateway entity of a second communication network providing access to a first communication network being different to the second communication network, the method comprising receiving a registration request of a user equipment for a registration to the first communication network via the second communication network, wherein the registration request comprises an anonymized subscriber identification element, obtaining a temporary identification for the user equipment, and forwarding the temporary identification for the user equipment to the user equipment.

According to further refinements, these examples may include one or more of the following features:
- the temporary identification for the user equipment may be forwarded to the user equipment in a secured signaling message;
- for obtaining the temporary identification for the user equipment, the temporary identification for the user equipment may be generated by combining at least one of the following: an identification element of the network node acting as the gateway entity of the second communication network, a contact information of the network node acting as the gateway entity of the second communication network, or a random number, with at least one of the following: a pre-selected number, or a randomly generated number;
- for obtaining the temporary identification for the user equipment, the temporary identification for the user equipment may be received from a network node of the first communication network, after forwarding the registration request of the user equipment to the network node of the first communication network;
- the temporary identification for the user equipment may be received in response to a request sent to the network node of the first communication network to be provided with the temporary identification for the user equipment;
- the temporary identification for the user equipment may be included in a contact information set of the gateway entity being sent to the user equipment;
- a key exchange procedure may be conducted with the user equipment, wherein the temporary identification for the user equipment may be used as an identification element of the user equipment;
- the temporary identification for the user equipment may be stored in context information of the user equipment;
- from a second access point of the second communication network providing access to the second communication network for the user equipment, the temporary identification for the user equipment having been connected to a first access point of the second communication network may be received, and a communication session to the user equipment via the second access point may be correlated by using the temporary identification for the user equipment when receiving a message from the user equipment including the temporary identification for the user equipment;
- the first communication network may be a cellular communication network based on 3GPP specifications, and the second communication network may be a trusted non-3GPP access communication network;
- the apparatus may comprise the network node, may be the network node or ma be comprised in the network node;
- the network node may be a communication network control element or a communication network control function;
- the network node may be a trusted non-3GPP gateway function.

According to an example of an embodiment, there is provided, for example, an apparatus for a network node, the apparatus comprising at least one processor, and at least one memory storing instructions that, when executed by the at least one processor, cause the apparatus at least to receive, from a gateway entity of a second communication network providing access to the first communication network, the second communication network being different to the first communication network, a registration request of a user equipment for a registration to the first communication network via the second communication network, wherein the registration request comprises an anonymized subscriber identification element, to generate a temporary identification for the user equipment, and to forward the temporary identification for the user equipment to the gateway entity of the second communication network.

Furthermore, according to an example of an embodiment, there is provided, for example, a method for a network node of a first communication network, the method comprising receiving, from a gateway entity of a second communication network providing access to the first communication network, the second communication network being different to the first communication network, a registration request of a user equipment for a registration to the first communication network via the second communication network, wherein the registration request comprises an anonymized subscriber identification element, generating a temporary identification for the user equipment, and forwarding the temporary identification for the user equipment to the gateway entity of the second communication network.

According to further refinements, these examples may include one or more of the following features:
- the temporary identification for the user equipment may be forwarded to the gateway entity in a secured signaling message;
- the temporary identification for the user equipment may be generated by combining at least one of the following: an identification element of the gateway entity of the second communication network, a contact information of the gateway entity of the second communication network, or a random number, with at least one of the following: a pre-selected number, or a randomly generated number;
- from the gateway entity, a request for providing the temporary identification for the user equipment may be received when the registration request of the user equipment is received, wherein the temporary identification for the user equipment may be generated and forwarded in response to the request;
- the first communication network may be a cellular communication network based on 3GPP specification, wherein the apparatus may be part of an access and mobility management function of the first communication network, and the second communication network may be a trusted non-3GPP access communication network;
- the apparatus may comprise the network node, may be network node or may be comprised in the network node;
- the network node may be a communication network control element or communication network control function acting as an access management entity of a first communication network;
- the network node may be an access and mobility management function.

According to an example of an embodiment, there is provided, for example, an apparatus for a user equipment connecting to a first communication network via a second communication network being different to the first communication network, the apparatus comprising at least one processor, and at least one memory storing instructions that, when executed by the at least one processor, cause the apparatus at least to receive, in a registration procedure to the first communication network via the second communication network, wherein an anonymized subscriber identification element is used for the registration request, a temporary identification for the user equipment, and to use the temporary identification for the user equipment in a key exchange procedure with a gateway entity of the second communication network as an identification of the user equipment.

Furthermore, according to an example of an embodiment, there is provided, for example, a method for a user equipment connecting to a first communication network via a second communication network being different to the first communication network, the method comprising receiving, in a registration procedure to the first communication network via the second communication network, wherein an anonymized subscriber identification element is used for the registration request, a temporary identification for the user equipment, and using the temporary identification for the user equipment in a key exchange procedure with a gateway entity of the second communication network as an identification of the user equipment.

According to further refinements, these examples may include one or more of the following features:
- the temporary identification for the user equipment may be received in a secured signaling message;
- the temporary identification for the user equipment may be received in a contact information set of the gateway entity;
- an access point mobility procedure for changing connection from a first access point to a second access point of the second communication network providing access to the second communication network may be conducted, and the temporary identification for the user equipment having been used with the first access point may be sent to the second access point as an identification of the user equipment;
- the first communication network may be a cellular communication network based on 3GPP specification, and the second communication network may be a trusted non-3GPP access communication network;
- the apparatus may comprise the user equipment, may be the user equipment or may be comprised in the user equipment.

According to an example of an embodiment, there is provided, for example, an apparatus for a network node acting as a second access point of a second communication network providing access to the second communication network, the apparatus comprising at least one processor, and at least one memory storing instructions that, when executed by the at least one processor, cause the apparatus at least: to conduct an access point mobility procedure for changing connection of a user equipment connected to a first communication network being different to the second communication network via a first access point of the second communication network, wherein the second access point represents a target access point in the access point mobility procedure, to receive a temporary identification for the user equipment having been used with the first access point as an identification of the user equipment, and to forward the temporary identification for the user equipment to a gateway entity of the second communication network as the identification of the user equipment.

Furthermore, according to an example of an embodiment, there is provided, for example, a method for a network node acting as a second access point of a second communication network providing access to the second communication network, the method comprising conducting an access point mobility procedure for changing connection of a user equipment connected to a first communication network being different to the second communication network via a first access point of the second communication network, wherein the second access point represents a target access point in the access point mobility procedure, receiving a temporary identification for the user equipment having been used with the first access point as an identification of the user equipment, and forwarding the temporary identification for the user equipment to a gateway entity of the second communication network as the identification of the user equipment.

According to further refinements, these examples may include one or more of the following features:
- the first communication network may be a cellular communication network based on 3GPP specification, and the second communication network may be a trusted non-3GPP access communication network;
- the apparatus may comprise the network node, may be the network node or may be comprised in the network node;
- the network node may be a communication network element or a communication network function;
- the network node may be a trusted non-3GPP access point.

According to an example of an embodiment, there is provided, for example, a system comprising: at least one processor and at least one memory storing instructions that, when executed by the at least one processor, cause the system at least: in a network node acting as a gateway entity of a second communication network providing access to a first communication network being different to the second communication network, to receive a registration request of a user equipment for a registration to the first communication network via the second communication network, wherein the registration request comprises an anonymized subscriber identification element, to obtain a temporary identification for the user equipment, and to forward the temporary identification for the user equipment to the user equipment, in a network node of the first communication network, to receive, from the gateway entity of the second communication network providing access to the first communication network, a registration request of a user equipment for a registration to the first communication network via the second communication network, wherein the registration request comprises an anonymized subscriber identification element, to generate a temporary identification for the user equipment, and to forward the temporary identification for the user equipment to the gateway entity of the second communication network; in a user equipment connecting to the first communication network via the second communication network, to receive, in a registration procedure to the first communication network via the second communication network, wherein an anonymized subscriber identification element is used for the registration request, a temporary identification for the user equipment, and to use the temporary identification for the user equipment in a key exchange procedure with a gateway entity of the second communication network as an identification of the user equipment; and in a network node acting as a second access point of the second communication network providing access to the second communication network, to conduct an access point mobility procedure for changing connection of a user equipment connected to a first communication network being different to the second communication network via a first access point of the second communication network, wherein the second access point represents a target access point in the access point mobility procedure, to receive a temporary identification for the user equipment having been used with the first access point as an identification of the user equipment, and to forward the temporary identification for the user equipment to a gateway entity of the second communication network as the identification of the user equipment.

According to an example of an embodiment, there is provided, for example, a system comprising: in a network node acting as a gateway entity of a second communication network providing access to a first communication network being different to the second communication network, means configured to receive a registration request of a user equipment for a registration to the first communication network via the second communication network, wherein the registration request comprises an anonymized subscriber identification element, means configured to obtain a temporary identification for the user equipment, and means configured to forward the temporary identification for the user equipment to the user equipment, in a network node of the first communication network, means configured to receive, from the gateway entity of the second communication network providing access to the first communication network, a registration request of a user equipment for a registration to the first communication network via the second communication network, wherein the registration request comprises an anonymized subscriber identification element, means configured to generate a temporary identification for the user equipment, and means configured to forward the temporary identification for the user equipment to the gateway entity of the second communication network; in a user equipment connecting to the first communication network via the second communication network means configured to receive, in a registration procedure to the first communication network via the second communication network, wherein an anonymized subscriber identification element is used for the registration request, a temporary identification for the user equipment, and means configured to use the temporary identification for the user equipment in a key exchange procedure with a gateway entity of the second communication network as an identification of the user equipment; and in a network node acting as a second access point of the second communication network providing access to the second communication network, means configured to conduct an access point mobility procedure for changing connection of a user equipment connected to a first communication network being different to the second communication network via a first access point of the second communication network, wherein the second access point represents a target access point in the access point mobility procedure, means configured to receive a temporary identification for the user equipment having been used with the first access point as an identification of the user equipment, and means configured to forward the temporary identification for the user equipment to a gateway entity of the second communication network as the identification of the user equipment.

In addition, according to embodiments, there is provided, for example, a computer program product for a computer, including software code portions for performing the steps of the above defined methods, when said product is run on the computer. The computer program product may include a computer-readable medium on which said software code portions are stored. Furthermore, the computer program product may be directly loadable into the internal memory of the computer and/or transmittable via a network by means of: upload; download; and/or push procedures.

In addition, according to embodiments, there is provided, for example, a computer program comprising instructions, which, when executed by an apparatus, cause the apparatus to perform the steps of the above defined methods.

In addition, according to embodiments, there is provided, for example, a computer readable medium comprising instructions, which, when executed by an apparatus, cause the apparatus to perform the steps of the above defined methods.

### BRIEF DESCRIPTION OF THE DRAWINGS

Some examples of disclosure related to embodiments are described below, by way of example only, with reference to the accompanying drawings, in which:
Fig. 1 shows a diagram illustrating an example of a communication network environment in which examples of embodiments are implementable;
Figs. 2A and 2B show diagrams representing examples of a configuration of a temporary identification for a user equipment according to examples of embodiments;
Fig. 3 shows a signaling diagram illustrating an example of a registration control procedure according to examples of embodiments;
Fig. 4 shows a signaling diagram illustrating an example of a registration control procedure according to examples of embodiments;
Fig. 5 shows a signaling diagram illustrating an alternative example of a registration control procedure according to examples of embodiments;
Fig. 6 shows a signaling diagram illustrating an example of an access point mobility procedure according to examples of embodiments;
Fig. 7 shows a flow chart of a processing conducted in a network node, such as a communication network control element or communication network control function, such as a TNGF, according to some examples of embodiments;
Fig. 8 shows a flow chart of a processing conducted in a network node, such as a communication network control element or communication network control function, such as an AMF, according to some examples of embodiments;
Fig. 9 shows a flow chart of a processing conducted in a user equipment (UE), according to some examples of embodiments;
Fig. 10 shows a flow chart of a processing conducted in a network node, such as a communication network element or a communication network function, such as a TNAP, according to some examples of embodiments;
Fig. 11 shows a diagram of a network node, such as a communication network control element or a communication network control function, such as a TNGF, according to some examples of embodiments
Fig. 12 shows a diagram of a network node, such as a communication network control element or a communication network control function, such as an AMF, according to some examples of embodiments;
Fig. 13 shows a diagram of a user equipment (UE), according to some examples of embodiments; and
Fig. 14 shows a diagram of a network node, such as a communication network element or a communication network function, such as a TNAP, according to some examples of embodiments.

### DETAILED DESCRIPTION

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

In order to be able to communicate with a communication network, a user equipment (UE) has to register with the corresponding network to get authorized to receive services, to enable mobility tracking and to enable reachability, for example. For this, the UE initiates a registration procedure using, for example, an initial registration to the communication network (e.g. a 5G network), a mobility registration update upon changing to a new Tracking Area (TA) outside the UE's registration area or when the UE is to update its capabilities or protocol parameters that are negotiated in registration procedure with or without changing to a new TA, and the like. Also, other registration scenarios are possible, such as registration update (due to a predefined time period of inactivity), or emergency registration.

It is possible that a communication network enables also registration of a UE via another communication network. For example, in the case of a 5G network, the 5GC supports connectivity of UEs via non-3GPP access networks, e.g., Wireless Local Area Network (WLAN) access networks, wherein untrusted non-3GPP access networks and trusted non-3GPP access networks (TNANs) are applicable. An untrusted non-3GPP access network can be connected to the 5GC via a non-3GPP interworking function (N3IWF), whereas a trusted non-3GPP access network can be connected to the 5GC via a trusted non-3GPP gateway function (TNGF). Both, the N3IWF and the TNGF, interface with the 5GC control plane and user plane functions via N2 and N3 interfaces, respectively.

In the following, different examples of embodiments will be described for illustrating a processing for controlling an access of a user equipment (UE) to a first communication network (e.g. a cellular wireless communication network such as a 3GPP based network) via a second communication network (e.g. a WLAN network based on IEEE 802.11) being different to the first communication network. To this end, as one example of a communication network to which examples of embodiments may be applied, a communication network architecture based on 3GPP standards for a communication network, such as 5G, is used, without restricting the disclosure to such an architecture. It would be apparent to a person skilled in the art that examples of embodiments may also be applied to other kinds of communication networks, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of described herein can be extended and applied to any other type of communication network, such as a wired communication networks as well.

The following examples and embodiments are to be understood only as illustrative examples. Although the text herein may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also comprise features, structures, units, modules etc. that have not been specifically mentioned.

A basic system architecture of a (tele)communication network, including a mobile communication system, where some examples of embodiments are applicable may include an architecture of one or more communication networks including wireless or wired access network subsystem(s) and core network(s). Such an architecture may include network nodes comprising one or more communication network control elements or functions, access network elements, radio access network elements, access service network gateways or base transceiver stations, such as a base station (BS), an access point (AP), a NodeB (NB), an eNB or a gNB, a distributed or a centralized unit, which controls a respective coverage area or cell(s) and with which one or more communication stations such as UEs, e.g. user devices or terminal devices, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases, and the like may be included.

The general functions and interconnections of the described elements and functions, which also depend on the actual network type, are understood by those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet, as well as with individual devices or groups of devices being not considered as a part of a network, such as monitoring devices like cameras, sensors, arrays of sensors, and the like. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function (NF) can be implemented either as a network element on a dedicated hardware, as a software instance running on a dedicated hardware, or as a virtualized network function (VNF) instantiated on an appropriate platform, e.g., a cloud infrastructure.

Furthermore, a network element or network functions, such as a UE, an AMF, an AUSF, an access point, a gateway function or other network elements or network functions, as described herein, and any other elements, functions or applications may be implemented by software, e.g. by a computer program product for a computer, and/or by hardware. For executing their respective processing, correspondingly used devices, nodes, functions or network elements may include several means, modules, units, components, etc. (not shown) which are utilized for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted herein that processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. For instance, a "division of labor" between involved network elements, functions or entities may vary case by case.

As used in this application, the term "processor" or "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and hardware circuit(s) and or processor(s), such as a microprocessor(s) or a portion of a microprocessor(s), that requires software (e.g., firmware) for operation, but the software may not be present when it is not needed for operation. This definition of processor or circuitry applies to all uses of this term in this application, including in any claims. As a further example, as used herein, the term processor or circuitry also covers an implementation of merely a hardware circuit or processor (or multiple processors) or portion of a hardware circuit or processor and its (or their) accompanying software and/or firmware. The term processor or circuitry also covers, for example and if applicable to the particular claim element, a baseband integrated circuit or processor integrated circuit for a mobile device or a similar integrated circuit in server, a cellular network device, or other computing or network device.

5GS is developed, amongst others, for providing enhancements to support various communication applications, such as industrial use cases. One aim is to enable the use of 3GPP 5G technology in non-public networks, also referred to as private networks, for dedicated use cases which offers improvements to flexibility, versatility, usability and efficiency.

Non-public networks (NPNs) are intended for the use by a private service provider such as an enterprise. These networks are not open for use by the general public. For example , one type of NPN is a so-called standalone non-public network (SNPN). A UE is able to access an SNPN by using, for example, either IMSI or NSI as a subscription permanent identifier (SUPI).

In order to enable a mutual authentication between the UE and the network, authentication and key agreement procedures are conducted. Keying material is provided to the serving network and is used between the UE and the serving network to create dedicated keys for subsequent security procedures. In 5GS, access security is managed in a unified manner, for which a AUSF (authentication server function) is used in the home network. As authentication methods, AKA and EAP are employed, for example. Privacy of the UE identity is preserved by registering to the serving network with a subscription concealed identifier (SUCI), which is a one-time useable identifier created from the subscription permanent identifier (SUPI).

As indicated above, 5GS provides enhanced user privacy by protecting the subscription permanent identifier (SUPI) over the air using a privacy preserving identifier that contains the concealed SUPI, i.e. the SUCI.

Regarding SNPN privacy considerations, for example, it is possible that only a part of the network access identifier (NAI) indicating the realm (i.e. the part identifying the network, but not the subscriber) is included in SUCI. That is, an anonymous identifier is provided.

Due to the anonymous identifier being usable in NPNs, such as SNPS, the following situation may arise when providing a non-3gpp access for a UE in an SNPN. That is, SNPN methods like anonymous SUCI has to be considered in specified registration mechanisms.

Specifically, when the identity of the subscriber is not shared, but just an anonymous identification is presented, it is possible that the anonymous identifier is used by a plurality of devices. Thus, the network does not know the user or subscriber. A gateway entity, such as a TNGF of a trusted non-3GPP network, does not know the identity of the USER. Therefore, a situation may arise where the TNGF and the UE assume different identifications for the UE, i.e. the UE uses another identification in a later processing phase of the registration than that known to the TNGF, so that the TNGF cannot link the identification received from the UE in this later phase to any known/unique identifier as it is only aware of the anonymous identifier. Therefore, identification and corresponding usage of a correct key for the mutual authentication may not be possible. This is in particular an issue in case the UE is registering for the first time or does not have, due to any reason, a valid identifier known to the network, such as a GUTI, while an anonymous SUCI is used by the UE.

Another consideration to be made is when a mobility scenario is considered. For example, when the UE switches connection from a source access point of the non-3GPP network, such as a source TNAP, to another access point representing a target TNAP of the same TNGF, once the UE changes the TNAP (and hence the SSID) and connects to another TNAP (the target TNAP), then the TNGF may not be able to identify and correlate the session of the UE in case the UE uses anonymous SUCI. In this case, namely, the UE connects to the new TNAP and provides the anonymous SUCI to the target TNAP, which the target TNAP provides to the TNGF. However, the TNGF is not able to correlate the session already stored for the UE via the former (source) TNAP.

Therefore, according to examples of embodiments, it is desired to provide an improved mechanism for controlling an access to a first communication network via a second communication network being different to the first communication network. For example, in order to enable an appropriate access for a UE using an anonymized subscription identification, such as an anonymous SUCI, the network, for example the TNGF, allocates a temporary identifier for a session, which is comparable to TMSI or GUTI. This temporary identifier, which is referred to hereinafter also a temporary identification for the UE, is then shared with the UE in a suitable signaling. The UE, on the other hand, provides the temporary identifier, i.e. the temporary identification for the UE, in another signaling with the network, in particular the TNGF, e.g. when a key exchange is conducted. The TGNF can then use the temporary identification for the UE to identify required keys so that the mutual authentication can be completed.

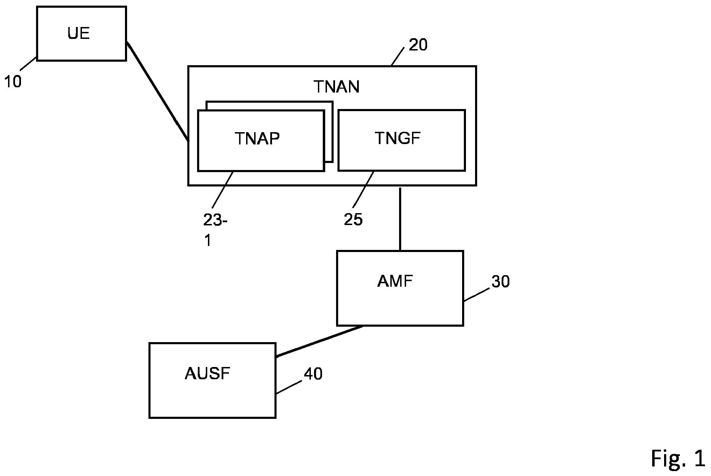

Fig. 1 shows a diagram illustrating an example of a communication network environment in which examples of embodiments are implementable. Specifically, in Fig. 1, a UE 10 is shown which is located in a communication network environment and tries to connect to a first communication network (e.g. 5G network) via a second communication network which represents a trusted non-3GPP communication network (in the example in Fig. 1, it is assumed that the trusted non-3GPP communication network is a SNPN network).

The trusted non-3GPP WLAN is represented by the TNAN 20. In the TNAN 20, one or more access points, e.g. TNAP 23-1, 23-2 etc. (only TNAP 23-1 is shown), are provided as an access of the TNAN 20 for connecting to the UE 10. Furthermore, a gateway entity between the first and second communication networks is provided by TNGF 25 which is an interface to the 5GC.

It is to be noted that TNAP 23-1 and TNGF 25 are defined in examples of embodiments as forming the TNAN 20. In practice, when, for example, a wireline operator deploys a TNAP in a residential gateway and the UE is trying to access to a mobile operator (e.g. an SNPN, a PLMN, which is assumed in examples of embodiments as the 5GC), the TNGF may be deployed by the 5GC operator. That is, TNAP may be vendor specific, while the TNGF provides access to the 5GC and is thus to be defined according to 3GPP specifications. Nevertheless, also for clarity reasons, the TNGF 25 is referred to as a communication network element of the second communication network (e.g., the TNAN) providing access to the first communication network (e.g., the 5GC).

With regard to the 5GC, only components and parts are depicted in Fig. 1 which are involved in the processing according to examples of embodiments, but it is to be noted that the 5GC comprises additional further elements besides those discussed in connection with Fig. 1.

Specifically, the TNAN 20, via the TNGF 25, is connected to an AMF 30 representing a network node, such as a communication network control element or function of the 5GC. The AMF 30 is a control plane function within 5GC and performs, for example, registration management (e.g. allows a UE to register/deregister with the 5G system wherein the AMF interacts with other network functions during the registration procedure), connection management (establishing and releasing control plane signaling connection between the UE and the AMF, NAS messages to be exchanged between the UE and the AMF, NAS signaling procedures for registration, authentication, service request and identity request), reachability management (by storing location information as part of the UE context, which includes the registration area, and mobility management (to maintain knowledge of UE's location within the network, for which the UE makes periodic registration updates after initial registration and updates due to mobility, e.g. if it moves out of a Tracking Area with which it is currently registered).

The AMF 30 is connected to an AUSF (authentication server function) 40 which supports authentication for 3GPP and non-3GPP access. The AUSF 40 provides AUSF service to the AMF 30 and serves as an EAP server for non-3GPP access authentication, for example.

As indicated above, according to examples of embodiments, for controlling an access to the first communication network via the second communication network and for enabling an appropriate access for the UE which is using an anonymized subscription identification, such as an anonymous SUCI, a temporary identifier for a session is generated and shared.

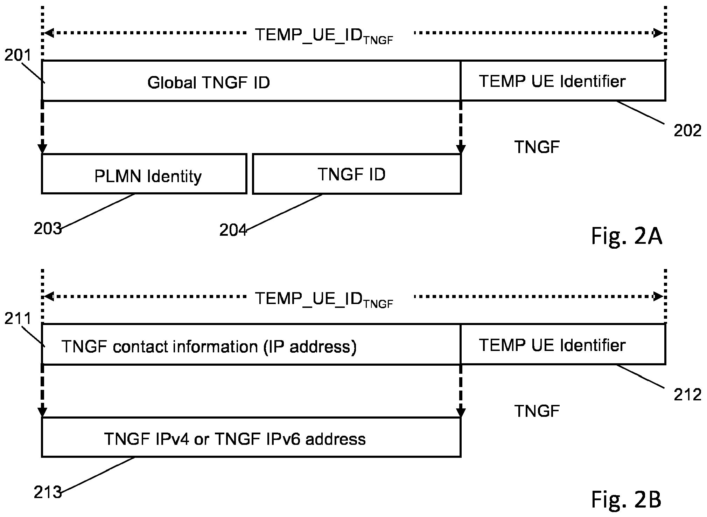

Fig. 2A shows a first example for such a temporary identifier, and Fig. 2B shows a second example for such a temporary identifier, which are referred to hereinafter also a temporary identification for the UE, TEMP_UE_ID_{TNGF}.

Specifically, in the example of Figs. 2A and 2B, it is assumed that the TNGF 25 generates the temporary identification for the UE, TEMP_UE_ID_{TNGF}. According to further examples, the temporary identification for the UE, TEMP_UE_ID_{TNGF} may instead be generated by the 5GC, e.g. the AMF 30. For example, the AMF 30 may be configured to generate the temporary identification for the UE, TEMP_UE_ID_{TNGF}, upon request from the TNGF, or when it receives a registration request of the UE via the TNGF 25 comprising the anonymized subscriber identification, such as the anonymous SUCI.

As shown in Fig. 2A, the temporary identification for the UE, TEMP_UE_ID_{TNGF}, generated by TNGF comprises two parts, i.e. a global TNGF node ID 201 and a temporary UE identifier 202. The global TNGF node ID 201 comprises, for example, a PLMN identity 203 and a TNGF ID 204, both of which are fixed values. On the other hand, the temporary UE identifier 202 can be a randomly generated number or a number which is pre-selected by the TNGF. The target of the temporary UE identifier 202 is to make the temporary identification for the UE, TEMP_UE_ID_{TNGF}, unique.

On the other hand, as shown in Fig. 2B, the temporary identification for the UE, TEMP_UE_ID_{TNGF}, generated by TNGF may alternatively comprise, for example, a TNGF contact information 211, such as an IP address of the TNGF like the TNGF IPv4 or IPv6 address 213, and a temporary UE identifier 212 which may be created in accordance with the temporary UE identifier 202.

According to further examples, the temporary identification for the UE, TEMP_UE_ID_{TNGF}, generated by TNGF may be a totally random number or any unique number generated by the TNGF. That is, the temporary identification for the UE, TEMP_UE_ID_{TNGF}, generated by TNGF (or the AMF, as indicated above) may be another number or value allowing to provide a unique temporary identification for the UE, TEMP_UE_ID_{TNGF}.

In the following, examples of embodiments are described in which a processing for a registration procedure of a UE to a first communication network, such as a 3GPP based network, via a second communication network, such as a trusted non-3GPP network, is described by using signaling diagrams illustrating the processing conducted for obtaining and forwarding the temporary identification for the UE, TEMP_UE_ID_{TNGF}, when the user equipment uses an anonymized subscriber information, such as an anonymous SUCI, in the initial registration. It is to be noted that the following examples are only for explanation, while the principles of examples of embodiments are also applicable to other procedures where a UE is registered as described above while an anonymized subscriber information, such as an anonymous SUCI, is used.

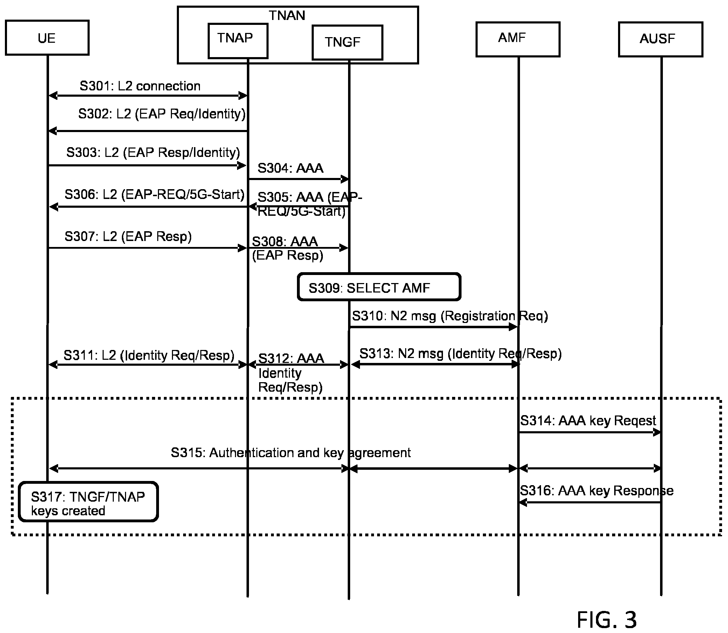

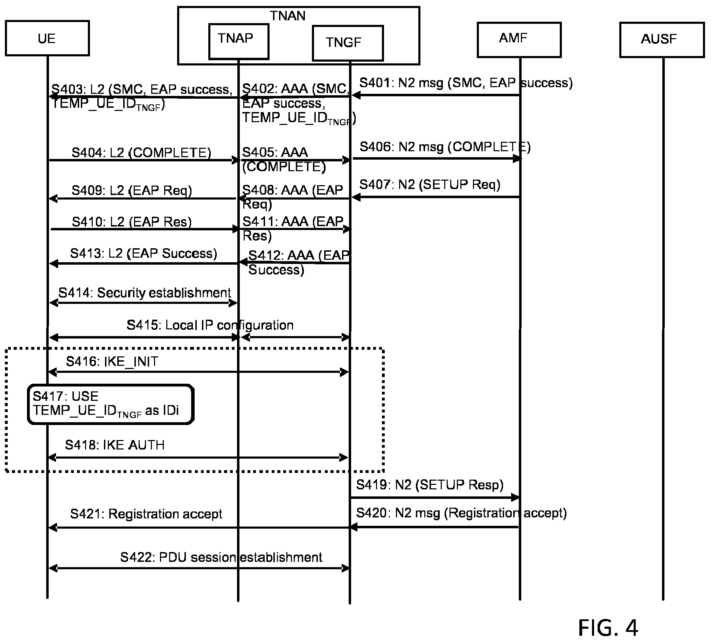

Figs. 3 and 4 show a signaling diagram illustrating an example of a procedure for controlling an access of a UE to a first communication network via a second communication network being different to the first communication network according to examples of embodiments. Specifically, Figs. 3 and 4 describe a first example of a processing for registering a UE to a first communication network (e.g., 5G network) via a second communication network (e.g. SNPN network, TNAN) which enables that the UE suitably access also when an anonymized subscriber identification is used.

That is, in the example of Figs. 3 and 4, the UE 10 connects to a trusted non-3GPP Access Network (e.g. TNAN 20 of Fig. 1) and it also registers to 5GC (e.g., AMF 30) via this TNAN 20. For example, an EAP-based procedure may be used as a part of 5GC registration procedure. The link between the UE 10 and the TNAN can be any data link (L2) that supports e.g., EAP encapsulation, e.g. PPP, Ethernet, IEEE 802.11, etc. The interface between the TNAP and TNGF is e.g. an AAA (authentication, authorization and accounting) interface.

Initially, the UE selects a PLMN and a TNAN for connecting to this PLMN by using a trusted non-3GPP access network selection procedure. During this procedure, the UE discovers the PLMNs with which the TNAN supports trusted connectivity (e.g. "5G connectivity").

In S301, a layer-2 (L2) connection is established between the UE and the TNAP 23-1. This corresponds e.g. to an 802.11 association, or a PPP LCP negotiation.

In S302 and S303, an EAP authentication procedure is initiated. EAP messages are encapsulated into L2 packets, for example. The UE provides an NAI that triggers the TNAP to send in S304 an AAA request to the TNGF. It is to be noted that between the TNAP and the TNGF the EAP packets are encapsulated into AAA messages.

In the following, an EAP-5G procedure is executed.

In S305 and S306, the TNGF responds with an AUTH response message which includes an EAP-Request/5G-Start packet. The EAP-Request/5G-Start packet informs the UE to initiate an EAP-5G session, i.e. to start sending NAS messages encapsulated within EAP-5G packets.

In S307 and S308, the UE validates the TNGF certificate and confirms that the TNGF identity matches the selected TNGF. The UE sends an EAP-Response/5G-NAS packet that contains a registration request message containing UE security capabilities and the anonymous SUCI (i.e. the anonymized subscription identification) as the UE ID. It is to be noted that in case the UE would have been registered already with the 5GC over 3GPP access , the UE sends the 5G-GUTI instead of anonymous SUCI.

That is, as indicated above, the TNGF is not aware of the identity of the subscriber, but receives only an anonymous identifier which can be used by a plurality of devices, so that the TNGF does not know the identity of the user.

In S309, the TGNF selects an AMF. Then , in S310, the TGNF forwards the registration request received from the UE to the AMF with an N2 message.

In S311, S312 and S313, an identity request/response procedure is conducted.

In S314 to S316, an authentication process is conducted. The AMF sends a key request to the AUSF in S314. The AUSF may initiate an authentication procedure between the AMF and the UE, wherein the authentication packets are encapsulated within NAS authentication messages and the NAS authentication messages are carried in N2 signaling between the AMF and the TNGF, and then are encapsulated within EAP-5G/5G-NAS packets between the TGNF and the UE.

In the final authentication message, the AUSF sends an anchor key which is used by the AMF to derive NAS security keys. Furthermore, the AUSF includes an EAP-Success indication. The UE also derives the required keys in S317.

Now, following to Fig. 3, reference is made to Fig. 4.

After the authentication procedure, in S401, the AMF sends a security mode command (SMC) to the UE in order to activate NAS security. This message is sent to the TGNF within an N2 message. The AMF encapsulates the EAP-Success received from the AUSF within the SMC message.

According to examples of embodiments, since the UE has provided, as the UE ID in S307 an anonymous identifier, the TGNF generates a temporary UE identifier (TEMP_UE_ID_{TNGF}), for example in accordance with the measures described in connection with Fig. 2A/B.

Then, in S402 and S403 (via the TNAP), the TNGF forwards the NAS SMC to the UE within an EAP-Request/5G-NAS packet. In this connection, the temporary UE identifier (TEMP_UE_ID_{TNGF}) is also forwarded to the UE.

In S404, the UE completes the authentication and creates or activates an NAS security context based on the information in the NAS SMC. The UE responds to the NAS SMC received from the AMF and encapsulates the NAS SMC Complete in an EAP-5G response sent to the AMF in S405 and S406.

A K_{TNGF} is created in the UE and in the AMF after the successful authentication. The K_{TNGF} is transferred from the AMF to the TNGF in S407 within an N2 initial context setup request.

The TNGF generates a KTNAP transfers it to TNAP in S408 within an AAA message.

Furthermore, after receiving the TNGF key from AMF in S407, the TNGF sends in S408 to the UE an EAP-Request/5G-Notification packet containing the "TNGF Contact Info", which includes the IP address of TNGF (forwarded in S409 to the UE).

Furthermore, after receiving an EAP-Response/5G-Notification packet from the UE (in S410 and S411), the TNGF sends in S412 the EAP-Success packet being forwarded to the UE in S413.

In S414, a security establishment procedure is executed wherein a common TNAP key is used by the UE and TNAP to derive security keys according to the applied non-3GPP technology and to establish a security association to protect all subsequent traffic. All messages between UE and TNAP are encrypted and integrity protected from this step onwards.

In S415, the UE receives IP configuration information from the TNAN.

In S416, the UE initiates an IKE_INIT exchange with the TNGF. The UE has received the IP address of TNGF during the EAP-5G signaling in S402, S403. Thus. the UE initiates an IKE_AUTH exchange in S418, wherein it includes in S417, when the UE has received the temporary identification for the UE, TEMP_UE_ID_{TNGF}, this temporary identification for the UE, TEMP_UE_ID_{TNGF}, as the UE ID (as indicated above, in case a 5G-GUTI is present, this would be used as in the UE Id provided in step S307).

That is, according to examples of embodiments, when an anonymized subscriber identification is used by the UE, such as an anonymous SUCI, and the temporary identification for the UE has been provided by the network, the UE does not use in S417 and S418 the former (anonymous) user ID as in S307. Thus, the TNGF can link the now used user ID and can use it to identify the correct key for the mutual authentication.

After S418, an IPsec security association is established between the UE and the TNGF and is used to transfer all subsequent NAS messages.

In S419, after the connection is successfully established, the TNGF responds to the AMF with an N2 Initial Context Setup Response message.

Then, in S420 and S421, NAS registration accept message is sent by the AMF and is forwarded to the UE via the established connection.

In S422, a PDU session establishment initiated by the UE is conducted. Then, user plane data for the established PDU session can be transported between the UE and TNGF.

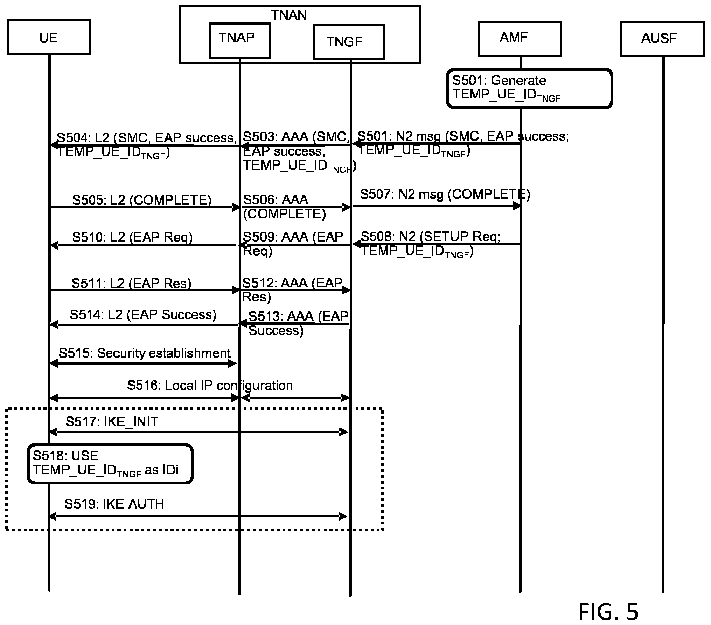

Next, with reference to Fig. 5, a signaling diagram illustrating another example of a procedure for controlling an access of a UE to a first communication network via a second communication network being different to the first communication network according to examples of embodiments is described. Specifically, Fig. 5 is related to a processing which is an alternative to the processing described in Fig. 4, i.e. it follows the processing described in connection with Fig. 3.

It is to be noted that the following description concentrates on the differences between the processing described in Fig. 4 and that described in Fig. 5. Processing parts which are the same in both procedures will not be described in detail, and the contents of the corresponding processing parts in Fig. 5 are in correspondence with those of Fig. 4, if not otherwise described.

As described above in connection with S307 and S308 of Fig. 3, the UE sends an EAP-Response/5G-NAS packet that contains a registration request message containing UE security capabilities and the anonymous SUCI (i.e. the anonymized subscription identification) as the UE ID. In S310, the TGNF forwards the registration request received from the UE to the AMF with an N2 message, which includes the anonymous SUCI (i.e. the anonymized subscription identification) as the UE ID.

Now, with reference to Fig. 5, the AMF generates the TNGF UE temporary ID for the UE in S501. That is, in the present example, the AMF generates a temporary UE identifier (TEMP_UE_ID_{TNGF}), for example in accordance with the measures described in connection with Fig. 2A/B.

It is to be noted that the generation of the temporary UE identifier (TEMP_UE_ID_{TNGF}), is triggered by a request from the TNGF requesting the AMF to generate temporary UE identifier (TEMP_UE_ID_{TNGF}). In this case, the generation of the temporary UE identifier (TEMP_UE_ID_{TNGF}) is conducted only when required, depending on the information received from the UE. Otherwise, the AMF generates the temporary UE identifier (TEMP_UE_ID_{TNGF}) when a registration request with an anonymized subscription identification is received, for example.

The AMF provides the generated temporary UE identifier (TEMP_UE_ID_{TNGF}) in S502, in which the AMF sends a security mode command (SMC) to the UE in order to activate NAS security. That is, the AMF provides the generated temporary UE identifier (TEMP_UE_ID_{TNGF}), for example, as part of NAS payload towards the UE. As an example for a secured signaling, the SMC request is used, which is integrity protected.

Then, in S503 and S504 (via the TNAP), the TNGF forwards the NAS SMC to the UE within an EAP-Request/5G-NAS packet. In this connection, the temporary UE identifier (TEMP_UE_ID_{TNGF}) received from the AMF is also forwarded to the UE.

S505 to S507 correspond basically to S404 to S406 of Fig. 4.

In S508, the AMF transfers to the TNGF the K_{TNGF} within an N2 initial context setup request. In this message, the AMF includes also the generated temporary UE identifier (TEMP_UE_ID_{TNGF}).

After receiving the TNGF key from AMF in S508, the TNGF sends in S509 to the UE (via S510) an EAP-Request/5G-Notification packet containing the "TNGF Contact Info", which includes the IP address of TNGF and optionally the temporary UE identifier (TEMP_UE_ID_{TNGF}).

The further processing according to S511 to S519 corresponds to the processing according to S410 to S418 in Fig. 4, including the usage of the temporary UE identifier (TEMP_UE_ID_{TNGF}) by the UE in S518 and S519. The further processing according to S419 to S422 in Fig. 4 can also be added to Fig. 5.

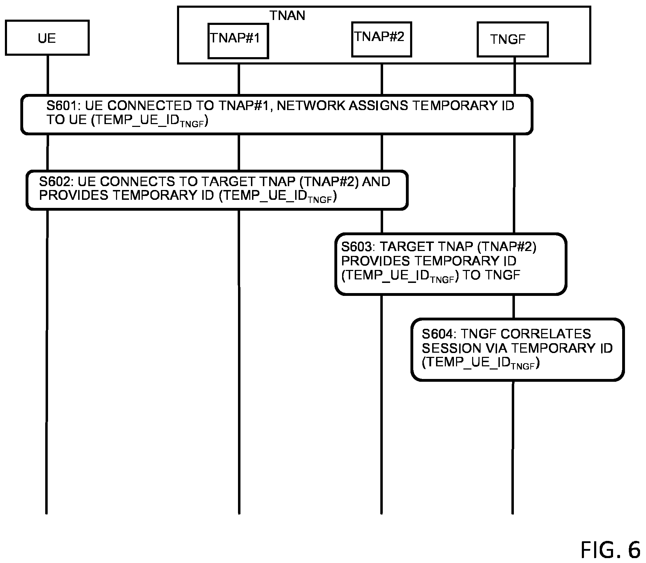

Fig. 6 shows a signaling diagram illustrating an example of a procedure for controlling an access of a UE to a first communication network via a second communication network being different to the first communication network according to a further example of an embodiment. Specifically, Fig. 6 describes an example of a mobility scenario. That is, when a UE switches connection from a source access point of the non-3GPP network, such as a source TNAP#1, to another access point representing a target TNAP#2 of the same TNGF, the UE connects to the target TNAP#2 by using the temporary UE identifier (TEMP_UE_ID_{TNGF}) assigned by the TNGF or the AMF as the UE ID. That is, instead of using the uses anonymous SUCI or the like, the UE connects to the new TNAP#2 by using the temporary UE identifier (TEMP_UE_ID_{TNGF}).

Thus, the TNGF is able to identify and correlate the session of the UE already stored for the UE via the former (source) TNAP#1.

That is, in TNAP mobility cases (mobility between source TNAP#1 to target TNAP#2) within a TNGF, the temporary UE identifier (TEMP_UE_ID_{TNGF}) assigned by TNGF or AMF is used during initial steps for TNGF to identify the UE. For this, the TNGF stores the temporary UE identifier (TEMP_UE_ID_{TNGF}) assigned to a UE in UE context data in the TNGF for further communications.

Referring to Fig. 6, in S601, the UE is connected to the TNAN via TNAP#1, wherein the network (TNGF or AMF) assigns to the UE the temporary UE identifier (TEMP_UE_ID_{TNGF}). As indicated above, the temporary UE identifier (TEMP_UE_ID_{TNGF}) is stored, for example, in UE context data in the TNGF.

In S602, TNAP mobility is started so that the UE connects from the TNAP#1 representing a source TNAP to a target TNAP (TNAP#2). In this procedure, the UE provides to the TNAP#2 the temporary UE identifier (TEMP_UE_ID_{TNGF}) being assigned for the session via TNAP#1.

In S603, the target TNAP (i.e. TNAP#2) sends the temporary UE identifier (TEMP_UE_ID_{TNGF}) received from the UE to the TNGF as information related to the TNAP mobility procedure.

In S604, the TNGF uses the received information, i.e. the temporary UE identifier (TEMP_UE_ID_{TNGF}), for correlating the session(s) of the UE between the former (source) TNAP#1 and the present (target) TNAP#2.

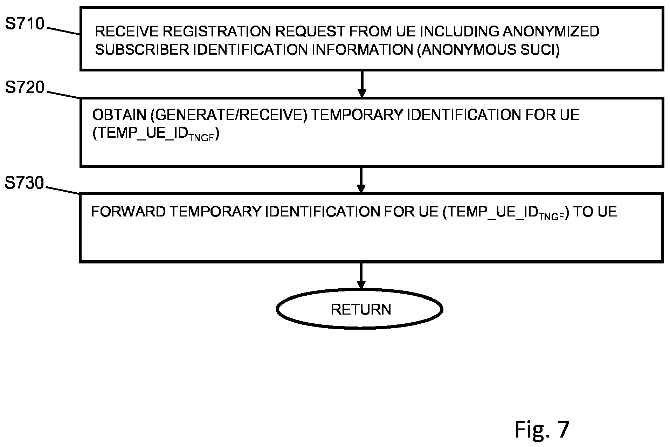

Fig. 7 shows a flow chart of a processing conducted in a network node, such as a communication network control element or communication network control function, such as a TNGF, according to some examples of the disclosure. That is, Fig. 7 shows a flowchart related to a processing conducted by a network node, such as a communication network control element or communication network control function acting as gateway entity of a second communication network providing access to a first communication network, such as the TNGF 25 of Figs. 1 to 6. According to examples of embodiments, the first communication network is, for example, a cellular communication network based on 3GPP specification, and the second communication network is for example a trusted non-3GPP access communication network, such as a SNPN.

In S710, the TNGF receives a registration request of a UE for a registration to the first communication network via the second communication network. The UE uses in the registration request an anonymized subscriber identification element.

In S720, a temporary identification for the UE is obtained, for example the TEMP_UE_ID_{TNGF} described above.

According to examples of embodiments, the temporary identification for the UE is obtained by generating the temporary identification for the UE in the TNGF. For this, at least one of the following is used as a one part of the temporary identification for the UE: an identification element of a network node, such as the communication network control element or communication network control function acting as the gateway entity of the second communication network (for example a global TNGF ID, which includes a PLMN identity and a TNGF ID, for example), a contact information of a network node, such as the communication network control element or communication network control function acting as the gateway entity of the second communication network (for example, an IP address of the TNGF), or a random number. As a second part, which is combined with the first part for generating the temporary identification for the UE, a pre-selected number, or a randomly generated number is used.

According to further examples of embodiments, the TNGF obtains the temporary identification for the UE by receiving a temporary identification for the UE from a network node, such as a communication network control element or communication network control function of the first communication network (e.g. the AMF). The temporary identification for the UE is received, for example, after forwarding the registration request of the UE to a network node, such as the communication network control element or communication network control function of the first communication network (AMF), wherein the registration request contains the anonymized subscriber identification element as the UE ID, for example.

According to further examples of embodiments, the temporary identification for the UE is received in response to a request sent from the TNGF to a network node, such as the communication network control element or communication network control function of the first communication network (e.g. the AMF). The request informs the AMF to provide the TNGF with the temporary identification for the UE.

According to further examples of embodiments, the temporary identification for the UE may also be added to TNGF contact information sent to the UE.

In S730, the temporary identification for the UE is sent to the UE. For example, the temporary identification for the UE is sent to the UE in a secured signaling message, such as a security mode command related message.

According to further examples of embodiments, the TNGF conducts a key exchange procedure with the UE wherein the temporary identification for the UE is used as an identification element of the UE in the corresponding signaling..

Moreover, according to further examples of embodiments, the temporary identification for the UE is stored in UE context information in the TNGF.

Furthermore, in a mobility scenario, according to examples of embodiments, the TNGF receives, from a second access point (i.e. target access point in the mobility procedure) of the second communication network the temporary identification for the UE having been connected to a first access point (i.e. source access point in the mobility procedure) of the second communication network. Then, the TNGF correlates a communication session to the UE via the second access point by using the temporary identification for the UE when receiving a message from the UE including the temporary identification for the UE.

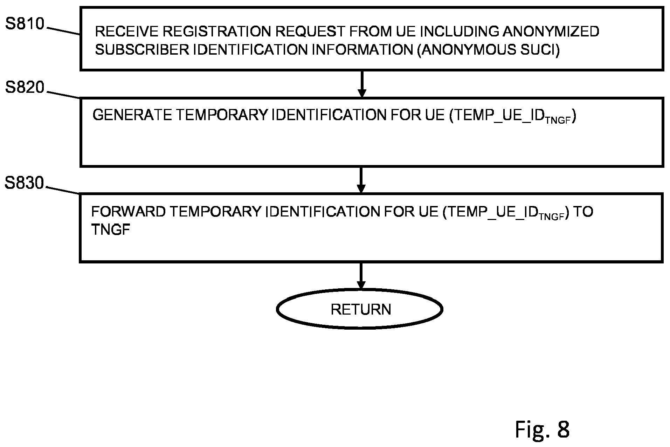

Fig. 8 shows a flow chart of a processing conducted in a network node, such as a communication network control element or communication network control function, such as an AMF, according to some examples of the disclosure. That is, Fig. 8 shows a flowchart related to a processing conducted by a network node, such as a communication network control element or communication network control function acting as an access management entity of a first communication network, such as the AMF 30 of Figs. 1 to 6. According to examples of embodiments, the first communication network is, for example, a cellular communication network based on 3GPP specification, and the second communication network is for example a trusted non-3GPP access communication network, such as a SNPN.

In S810, the AMF receives, from a gateway entity of a second communication network providing access to the first communication network (e.g. the TNGF), a registration request of a UE for a registration to the first communication network via the second communication network. The registration request comprises an anonymized subscriber identification element as the UE ID.

In S820, the AMF generates a temporary identification for the UE.

According to examples of embodiments, the temporary identification for the UE is generated as described in the following. At least one of the following is used as a one part of the temporary identification for the UE: an identification element of a network node, such as the communication network control element or communication network control function acting as the gateway entity of the second communication network (for example a global TNGF ID, which includes a PLMN identity and a TNGF ID, for example), a contact information of a network node, such as the communication network control element or communication network control function acting as the gateway entity of the second communication network (for example, an IP address of the TNGF), or a random number. As a second part, which is combined with the first part for generating the temporary identification for the UE, a pre-selected number, or a randomly generated number is used.

According to examples of embodiments, the AMF receives from the gateway entity a request for providing the temporary identification for the UE when the registration request of the UE is received. The temporary identification for the UE is generated and forwarded in response to the request.

In S830, the AMF forwards the temporary identification for the UE to the gateway entity of the second communication network (e.g. the TNGF). According to examples of embodiments, the temporary identification for the UE is sent to the gateway entity in a secured signaling message, such as a security mode command related message.

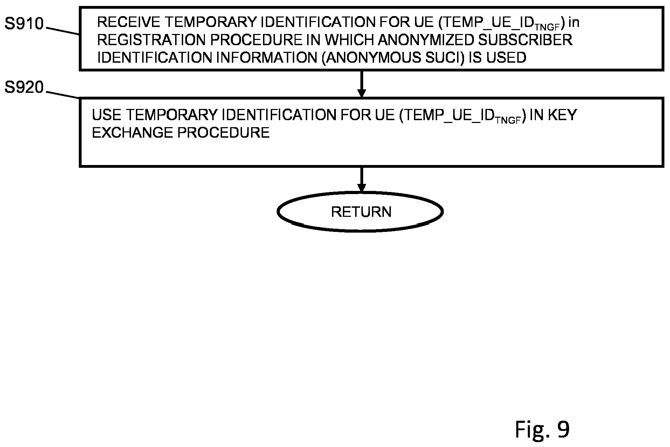

Fig. 9 shows a flow chart of a processing conducted in a UE according to some examples of the disclosure. That is, Fig. 9 shows a flowchart related to a processing conducted by a UE connecting to a first communication network via a second communication network being different to the first communication network, such as the UE 10 of Figs. 1 to 6. According to examples of embodiments, the first communication network is, for example, a cellular communication network based on 3GPP specification, and the second communication network is for example a trusted non-3GPP access communication network, such as a SNPN.

In S910, the UE receives, in a registration procedure to the first communication network via the second communication network, wherein an anonymized subscriber identification element is used for the registration request, a temporary identification for the UE.

According to examples of embodiments, the temporary identification for the UE is received in a secured signaling message, such as a security mode command related message.

Furthermore, according to examples of embodiments, the temporary identification for the UE is also received in TNGF contact information.

In S920, the UE uses the temporary identification for the UE in a key exchange procedure with a gateway entity of the second communication network (e.g. the TNGF) as an identification of the UE.

Furthermore, in a mobility scenario, according to examples of embodiments, when the UE conducts an access point mobility procedure for changing connection from a first access point (i.e. source access point in the mobility procedure) to a second access point (i.e. target access point in the mobility procedure) of the second communication network, the UE sends to the second access point (i.e. target access point in the mobility procedure) the temporary identification for the UE having been used with the first access point (i.e. source access point in the mobility procedure) as an identification of the UE.

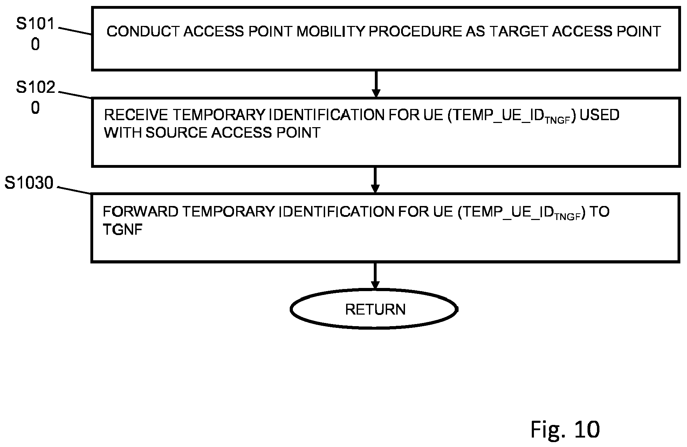

Fig. 10 shows a flow chart of a processing conducted in a network node, such as a communication network element or communication network function acting as a second access point (i.e. a target access point in a mobility scenario) of the second communication network providing access to the second communication network, as a TNAP (TNAP#2), according to some examples of the disclosure. That is, Fig. 10 shows a flowchart related to a processing conducted by a TNAP, such as the TNAP#2 of Fig. 6. According to examples of embodiments, a first communication network is, for example, a cellular communication network based on 3GPP specification, and the second communication network is for example a trusted non-3GPP access communication network, such as a SNPN.

In S310, when a UE conducts (in S1010) an access point mobility procedure for changing connection from a first access point (i.e. source access point in the mobility procedure) to a second access point (i.e. target access point in the mobility procedure) of the second communication network, the UE sends to the second access point (i.e. target access point in the mobility procedure) the TNAP#2 receives in S1020 a temporary identification for the UE having been used with the first access point (i.e. source access point in the mobility procedure) as an identification of the UE.

Then, in S1030, the TNAP#2 forwards the temporary identification for the UE to a gateway entity of the second communication network (e.g. the TNGF) as the identification of the UE.

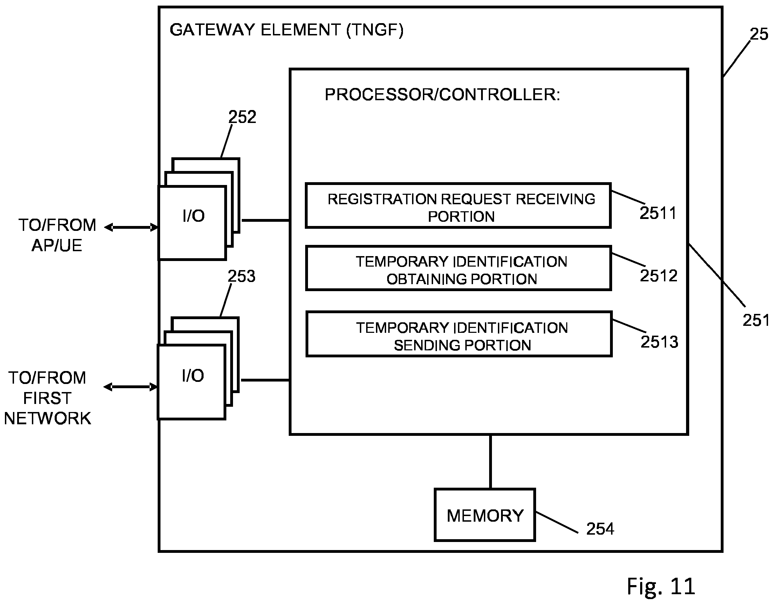

Fig. 11 shows a diagram of a a network node, such as communication network control element or communication network control function of the second communication network (TNAN), such as the TNGF 25, which conducts a communication control according to some examples of embodiments, as described in connection with Figs. 2 to 6. It is to be noted that the network element or function such as the TNGF 25 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The TNGF 25 shown in Fig. 11 may include a processing circuitry, a processing function, a control unit or a processor 251, such as a CPU or the like, which is suitable for executing instructions given by programs or the like related to the control procedure. The processor 251 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 252 and 253 denotes input/output (I/O) units or functions (interfaces) connected to the processor or processing function 251. The I/O units 252 may be used for communicating with elements of the second communication network and thus with the UE 10 (e.g. via TNAP 23-1), as shown in Fig. 1. The I/O units 253 may be used for communicating with elements of the first communication network, such as the AMF 30 as shown in Fig. 1. The I/O units 252 and 253 may be combined units including communication equipment towards several entities, or may include a distributed structure with a plurality of different interfaces for different entities. Reference sign 254 denotes a memory usable, for example, for storing data and programs to be executed by the processor or processing function 251 and/or as a working storage of the processor or processing function 251. It is to be noted that the memory 254 may be implemented by using one or more memory portions of the same or different type of memory.

The processor or processing function 251 is configured to execute processing related to the above described control procedure. In particular, the processor or processing circuitry or function 251 includes one or more of the following sub-portions. Sub-portion 2511 is a processing portion which is usable as a portion for receiving a registration request. The portion 2511 may be configured to perform processing according to S710 of Fig. 7. Furthermore, the processor or processing circuitry or function 251 may include a sub-portion 2512 usable as a portion for obtaining a temporary identification. The portion 2512 may be configured to perform a processing according to S720 of Fig. 7. Moreover, the processor or processing circuitry or function 251 may include a sub-portion 2513 usable as a portion for sending the temporary identification. The portion 2513 may be configured to perform a processing according to S730 of Fig. 7.

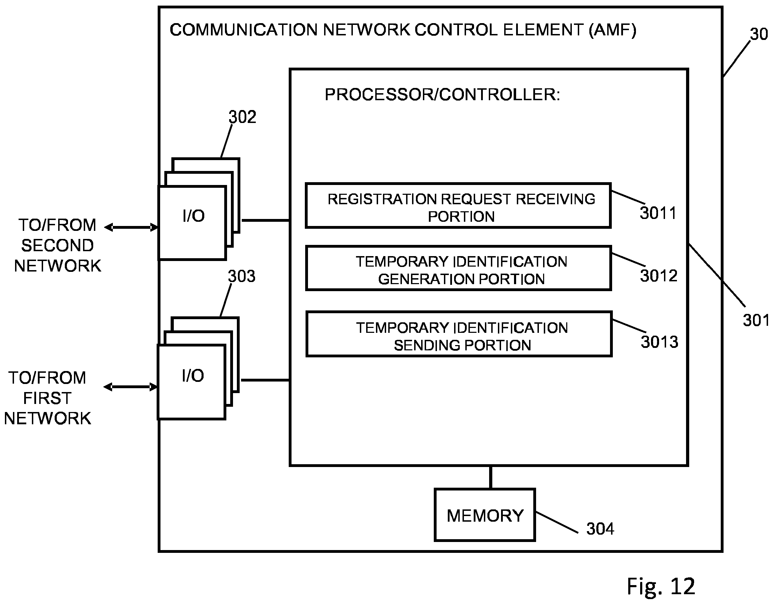

Fig. 12 shows a diagram of a network node, such as a communication network control element or communication network control function, such as an AMF 30, which conducts a communication control according to some examples of embodiments, as described in connection with Figs. 2 to 6. It is to be noted that the network element or function such as the AMF 30 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The AMF 30 shown in Fig. 12 may include a processing circuitry, a processing function, a control unit or a processor 301, such as a CPU or the like, which is suitable for executing instructions given by programs or the like related to the control procedure. The processor 301 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 302 and 303 denotes input/output (I/O) units or functions (interfaces) connected to the processor or processing function 301. The I/O units 302 may be used for communicating with elements of a second communication network, such as the TNAN as shown in Fig. 1. The I/O units 303 may be used for communicating with elements of a first communication network, such as the AUSF as shown in Fig. 1. The I/O units 302 and 303 may be combined units including communication equipment towards several entities, or may include a distributed structure with a plurality of different interfaces for different entities. Reference sign 304 denotes a memory usable, for example, for storing data and programs to be executed by the processor or processing function 301 and/or as a working storage of the processor or processing function 301. It is to be noted that the memory 304 may be implemented by using one or more memory portions of the same or different type of memory.

The processor or processing function 301 is configured to execute processing related to the above described control procedure. In particular, the processor or processing circuitry or function 301 includes one or more of the following sub-portions. Sub-portion 3011 is a processing portion which is usable as a portion for receiving a registration request. The portion 3011 may be configured to perform processing according to S810 of Fig. 8. Furthermore, the processor or processing circuitry or function 301 may include a sub-portion 3012 usable as a portion for generating a temporary identification. The portion 3012 may be configured to perform a processing according to S820 of Fig. 8. In addition, the processor or processing circuitry or function 301 may include a sub-portion 3013 usable as a portion for sending the temporary identification. The portion 3013 may be configured to perform a processing according to S830 of Fig. 8.

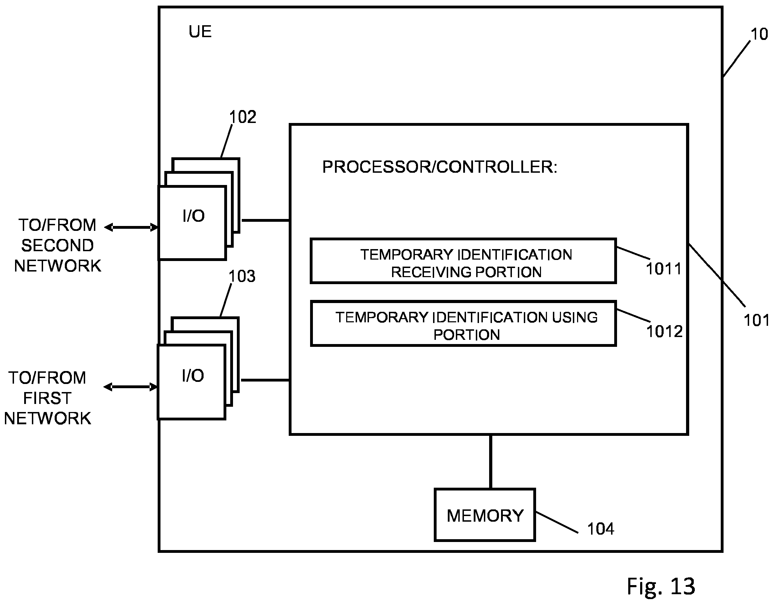

Fig. 13 shows a diagram of a user equipment (acting as a communication element or communication function), such as UE 10, which conducts a processing according to some examples of embodiments, as described in connection with Figs. 2 to 6. It is to be noted that the network element or function such as the UE 10 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The UE 10 shown in Fig. 13 may include a processing circuitry, a processing function, a control unit or a processor 101, such as a CPU or the like, which is suitable for executing instructions given by programs or the like related to the control procedure. The processor 101 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 102 and 103 denotes input/output (I/O) units or functions (interfaces) connected to the processor or processing function 101. The I/O units 102 may be used for communicating with elements of a second communication network, such as the TNAN as shown in Fig. 1. The I/O units 103 may be used for communicating with elements of a first communication network, such as the AMF 30 as shown in Fig. 1. The I/O units 102 and 103 may be combined units including communication equipment towards several entities, or may include a distributed structure with a plurality of different interfaces for different entities. Reference sign 104 denotes a memory usable, for example, for storing data and programs to be executed by the processor or processing function 101 and/or as a working storage of the processor or processing function 101. It is to be noted that the memory 104 may be implemented by using one or more memory portions of the same or different type of memory.

The processor or processing function 101 is configured to execute processing related to the above described control procedure. In particular, the processor or processing circuitry or function 101 includes one or more of the following sub-portions. Sub-portion 1011 is a processing portion which is usable as a portion for receiving a temporary identification. The portion 1011 may be configured to perform processing according to S910 of Fig. 9. Furthermore, the processor or processing circuitry or function 101 may include a sub-portion 1012 usable as a portion for using the temporary identification. The portion 1012 may be configured to perform a processing according to S920 of Fig. 9.

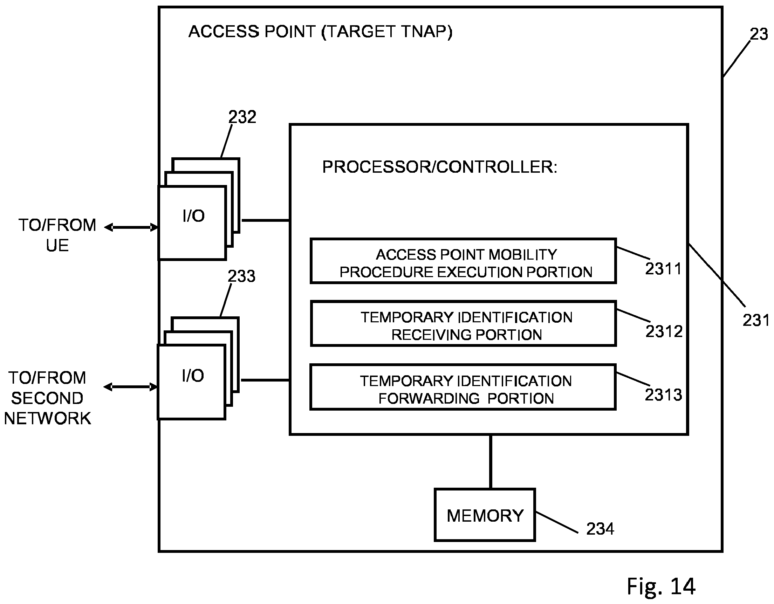

Fig. 14 shows a diagram of a network node, such as a communication network element or communication network function of the second communication network (TNAN), such as a TNAP being a target TNAP in case of a mobility procedure, which conducts a communication control according to some examples of embodiments, as described in connection with Fig. 6. It is to be noted that the network element or function such as the TNAP 23 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The TNAP 23 shown in Fig. 14 may include a processing circuitry, a processing function, a control unit or a processor 231, such as a CPU or the like, which is suitable for executing instructions given by programs or the like related to the control procedure. The processor 231 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 232 and 233 denotes input/output (I/O) units or functions (interfaces) connected to the processor or processing function 231. The I/O units 232 may be used for communicating with the UE 10, as shown in Fig. 1. The I/O units 233 may be used for communicating with elements of the second communication network, such as the TNGF 25 as shown in Fig. 1. The I/O units 232 and 233 may be combined units including communication equipment towards several entities, or may include a distributed structure with a plurality of different interfaces for different entities. Reference sign 234 denotes a memory usable, for example, for storing data and programs to be executed by the processor or processing function 231 and/or as a working storage of the processor or processing function 231. It is to be noted that the memory 234 may be implemented by using one or more memory portions of the same or different type of memory.

The processor or processing function 231 is configured to execute processing related to the above described control procedure. In particular, the processor or processing circuitry or function 231 includes one or more of the following sub-portions. Sub-portion 2311 is a processing portion which is usable as a portion for conducting an access point mobility procedure. The portion 2311 may be configured to perform processing according to S1010 of Fig. 10. Furthermore, the processor or processing circuitry or function 231 may include a sub-portion 2312 usable as a portion for receiving a temporary identification. The portion 2312 may be configured to perform a processing according to S1020 of Fig. 10. Moreover, the processor or processing circuitry or function 231 may include a sub-portion 2313 usable as a portion for forwarding the temporary identification. The portion 2313 may be configured to perform a processing according to S1030 of Fig. 10.

It is to be noted that examples of embodiments are applicable to various different network configurations. The examples of embodiments shown in the above described figures, which are used as a basis for the examples of embodiments described herein, are only illustrative and are not limiting in any way. That is, additional further existing and proposed new functionalities available in a corresponding operation environment may be used in connection with examples of embodiments based on the principles defined.

According to a further example of embodiments, there is provided, for example, an apparatus for a network node acting as a gateway entity of a second communication network providing access to a first communication network being different to the second communication network, the apparatus comprising means configured to receive a registration request of a user equipment for a registration to the first communication network via the second communication network, wherein the registration request comprises an anonymized subscriber identification element, means configured to obtain a temporary identification for the user equipment, and means configured to forward the temporary identification for the user equipment to the user equipment.

Furthermore, according to some other examples of embodiments, the above defined apparatus may further comprise means for conducting at least one of the processing defined in the above described methods, for example a method according to that described in connection with Fig. 7.

According to a further example of embodiments, there is provided, for example, an apparatus for a network node, the apparatus comprising means configured to receive, from a gateway entity of a second communication network providing access to the first communication network, the second communication network being different to the first communication network, a registration request of a user equipment for a registration to the first communication network via the second communication network, wherein the registration request comprises an anonymized subscriber identification element, means configured to generate a temporary identification for the user equipment, and means configured to forward the temporary identification for the user equipment to the gateway entity of the second communication network.

Furthermore, according to some other examples of embodiments, the above defined apparatus may further comprise means for conducting at least one of the processing defined in the above described methods, for example a method according to that described in connection with Fig. 8.

According to a further example of embodiments, there is provided, for example, an apparatus for a user equipment connecting to a first communication network via a second communication network being different to the first communication network, the apparatus comprising means configured to receive, in a registration procedure to the first communication network via the second communication network, wherein an anonymized subscriber identification element is used for the registration request, a temporary identification for the user equipment, and means configured to use the temporary identification for the user equipment in a key exchange procedure with a gateway entity of the second communication network as an identification of the user equipment.

Furthermore, according to some other examples of embodiments, the above defined apparatus may further comprise means for conducting at least one of the processing defined in the above described methods, for example a method according to that described in connection with Fig. 9.

According to a further example of embodiments, there is provided, for example, an apparatus for a network node acting as a second access point of a second communication network providing access to the second communication network, the apparatus comprising means configured to conduct an access point mobility procedure for changing connection of a user equipment connected to a first communication network being different to the second communication network via a first access point of the second communication network, wherein the second access point represents a target access point in the access point mobility procedure, means configured to receive a temporary identification for the user equipment having been used with the first access point as an identification of the user equipment, and means configured to forward the temporary identification for the user equipment to a gateway entity of the second communication network as the identification of the user equipment.

Furthermore, according to some other examples of embodiments, the above defined apparatus may further comprise means for conducting at least one of the processing defined in the above described methods, for example a method according to that described in connection with Fig. 10.

According to a further example of embodiments, there is provided, for example, a non-transitory computer readable medium comprising program instructions for causing an apparatus to perform, when used in a network node acting as a gateway entity of a second communication network providing access to a first communication network being different to the second communication network, a processing comprising receiving a registration request of a user equipment for a registration to the first communication network via the second communication network, wherein the registration request comprises an anonymized subscriber identification element, obtaining a temporary identification for the user equipment, and forwarding the temporary identification for the user equipment to the user equipment.

According to a further example of embodiments, there is provided, for example, a non-transitory computer readable medium comprising program instructions for causing an apparatus to perform, when used in a network node of a first communication network, a processing comprising receiving, from a gateway entity of a second communication network providing access to the first communication network, the second communication network being different to the first communication network, a registration request of a user equipment for a registration to the first communication network via the second communication network, wherein the registration request comprises an anonymized subscriber identification element, generating a temporary identification for the user equipment, and forwarding the temporary identification for the user equipment to the gateway entity of the second communication network.

According to a further example of embodiments, there is provided, for example, a non-transitory computer readable medium comprising program instructions for causing an apparatus to perform, when used in a user equipment connecting to a first communication network via a second communication network being different to the first communication network, a processing comprising receiving, in a registration procedure to the first communication network via the second communication network, wherein an anonymized subscriber identification element is used for the registration request, a temporary identification for the user equipment, and using the temporary identification for the user equipment in a key exchange procedure with a gateway entity of the second communication network as an identification of the user equipment.

According to a further example of embodiments, there is provided, for example, a non-transitory computer readable medium comprising program instructions for causing an apparatus to perform, when used in a network node acting as a second access point of a second communication network providing access to the second communication network, a processing comprising conducting an access point mobility procedure for changing connection of a user equipment connected to a first communication network being different to the second communication network via a first access point of the second communication network, wherein the second access point represents a target access point in the access point mobility procedure, receiving a temporary identification for the user equipment having been used with the first access point as an identification of the user equipment, and forwarding the temporary identification for the user equipment to a gateway entity of the second communication network as the identification of the user equipment.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, Bluetooth, Infrared, and the like may be used; additionally, embodiments may also apply wired technologies, e.g. IP based access technologies like cable networks or fixed lines.
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, including a computer usable medium having a computer readable program code embodied therein, the computer readable program code adapted to execute a process as described in embodiments, wherein the computer usable medium may be a non-transitory medium.

Although the present disclosure has been described herein before with reference to particular embodiments thereof, the present disclosure is not limited thereto and various modifications can be made thereto.

As used herein, "at least one of the following: " and "at least one of " and similar wording, where the list of two or more elements are joined by "and" or "or", mean at least any one of the elements, or at least any two or more of the elements, or at least all the elements.

## Claims

1. A method for a network node acting as a gateway entity of a second communication network providing access to a first communication network being different to the second communication network, the method comprising
receiving a registration request of a user equipment for a registration to the first communication network via the second communication network, wherein the registration request comprises an anonymized subscriber identification element,
obtaining a temporary identification for the user equipment, and
forwarding the temporary identification for the user equipment to the user equipment.

2. The method according to claim 1, further comprising
forwarding the temporary identification for the user equipment to the user equipment in a secured signaling message.

3. The method according to claim 1, further comprising
generating, for obtaining the temporary identification for the user equipment, the temporary identification for the user equipment by combining at least one of the following:
an identification element of the network node acting as the gateway entity of the second communication network,
a contact information of the network node acting as the gateway entity of the second communication network, or
a random number
with at least one of the following:
a pre-selected number, or
a randomly generated number.

4. A method for a network node of a first communication network, the method comprising
receiving, from a gateway entity of a second communication network providing access to the first communication network, the second communication network being different to the first communication network, a registration request of a user equipment for a registration to the first communication network via the second communication network, wherein the registration request comprises an anonymized subscriber identification element,
generating a temporary identification for the user equipment, and
forwarding the temporary identification for the user equipment to the gateway entity of the second communication network.

5. The method according to claim 4, further comprising
forwarding the temporary identification for the user equipment to the gateway entity in a secured signaling message.

6. The method according to claim 4, further comprising
generating the temporary identification for the user equipment by combining at least one of the following:
an identification element of the gateway entity of the second communication network,
a contact information of the gateway entity of the second communication network, or
a random number
with at least one of the following:
a pre-selected number, or
a randomly generated number.

7. A method for a user equipment connecting to a first communication network via a second communication network being different to the first communication network, the method comprising
receiving, in a registration procedure to the first communication network via the second communication network, wherein an anonymized subscriber identification element is used for the registration request, a temporary identification for the user equipment, and
using the temporary identification for the user equipment in a key exchange procedure with a gateway entity of the second communication network as an identification of the user equipment.

8. The method according to claim 7, further comprising
receiving the temporary identification for the user equipment in a secured signaling message.

9. The method according to claim 7, further comprising
receiving the temporary identification for the user equipment in a contact information set of the gateway entity.

10. The method according to claim 7, further comprising
conducting an access point mobility procedure for changing connection from a first access point to a second access point of the second communication network providing access to the second communication network, and
sending, to the second access point, the temporary identification for the user equipment having been used with the first access point as an identification of the user equipment.

11. An apparatus, for a network node acting as a gateway entity of a second communication network providing access to a first communication network being different to the second communication network, comprising means for:
receiving a registration request of a user equipment for a registration to the first communication network via the second communication network, wherein the registration request comprises an anonymized subscriber identification element,
obtaining a temporary identification for the user equipment, and
forwarding the temporary identification for the user equipment to the user equipment.

12. An apparatus, for a network node of a first communication network, comprising means for:
receiving, from a gateway entity of a second communication network providing access to the first communication network, the second communication network being different to the first communication network, a registration request of a user equipment for a registration to the first communication network via the second communication network, wherein the registration request comprises an anonymized subscriber identification element,
generating a temporary identification for the user equipment, and
forwarding the temporary identification for the user equipment to the gateway entity of the second communication network.

13. An apparatus, for a user equipment connecting to a first communication network via a second communication network being different to the first communication network, comprising means for:
receiving, in a registration procedure to the first communication network via the second communication network, wherein an anonymized subscriber identification element is used for the registration request, a temporary identification for the user equipment, and
using the temporary identification for the user equipment in a key exchange procedure with a gateway entity of the second communication network as an identification of the user equipment.

14. A computer program comprising instructions for causing an apparatus to perform the steps of claim 1, 4, or 7.

15. *A* system comprising:
in a network node acting as a gateway entity of a second communication network providing access to a first communication network being different to the second communication network,
means configured to receive a registration request of a user equipment for a registration to the first communication network via the second communication network, wherein the registration request comprises an anonymized subscriber identification element,
means configured to obtain a temporary identification for the user equipment, and
means configured to forward the temporary identification for the user equipment to the user equipment,
in a network node of the first communication network,
means configured to receive, from the gateway entity of the second communication network providing access to the first communication network, a registration request of a user equipment for a registration to the first communication network via the second communication network, wherein the registration request comprises an anonymized subscriber identification element,
means configured to generate a temporary identification for the user equipment, and
means configured to forward the temporary identification for the user equipment to the gateway entity of the second communication network;
in a user equipment connecting to the first communication network via the second communication network
means configured to receive, in a registration procedure to the first communication network via the second communication network, wherein an anonymized subscriber identification element is used for the registration request, a temporary identification for the user equipment, and
means configured to use the temporary identification for the user equipment in a key exchange procedure with a gateway entity of the second communication network as an identification of the user equipment; and
in a network node acting as a second access point of the second communication network providing access to the second communication network,
means configured to conduct an access point mobility procedure for changing connection of a user equipment connected to a first communication network being different to the second communication network via a first access point of the second communication network, wherein the second access point represents a target access point in the access point mobility procedure,
means configured to receive a temporary identification for the user equipment having been used with the first access point as an identification of the user equipment, and
means configured to forward the temporary identification for the user equipment to a gateway entity of the second communication network as the identification of the user equipment.
